(19) Europäisches Patentamt
European Patent Office
Office européen des brevets

(11) EP 1 998 161 A1

(12) **EUROPEAN PATENT APPLICATION**

(43) Date of publication:
03.12.2008 Bulletin 2008/49

(51) Int Cl.:
*G01N 21/03* (2006.01)  *G01N 21/63* (2006.01)
*G01N 33/487* (2006.01)  *G01N 29/036* (2006.01)

(21) Application number: 07388040.3

(22) Date of filing: 29.05.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: The Technical University of Denmark
(DTU)
2800 Lyngby (DK)

(72) Inventors:
• Lindgård, Per-Anker
4560 Vig (DK)
• Abitan, Haim
2100 Copenhagen Ø (DK)
• Bohr, Henrik
3460 Birkerød (DK)

(74) Representative: Benthin, Stig et al
Zacco Denmark A/S
Hans Bekkevolds Allé 7
DK-2900 Hellerup (DK)

(54) **Acoustic resonator cell for spectroscopic analysis of a compound in a fluid**

(57)  The invention concerns a device and a method for analyzing a fluid and/or a compound in a fluid. In particular, the invention relates to a resonator cell, wherein an essentially standing, longitudinal acoustic wave is created within the fluid by the use of ultrasonic pulses. Pressure-related physical and/or chemical parameters are monitored by spectroscopic techniques.

**Figure 3**

Printed by Jouve, 75001 PARIS (FR)

**Description**

**Technical field of the invention**

The invention concerns a device and a method for analyzing a fluid and/or a compound in a fluid. In particular, the invention relates to a resonator cell, wherein an essentially standing, longitudinal acoustic wave is created within the fluid by the use of ultrasonic pulses. Pressure-related physical and/or chemical parameters are monitored by spectroscopic techniques.

**Background of the invention**

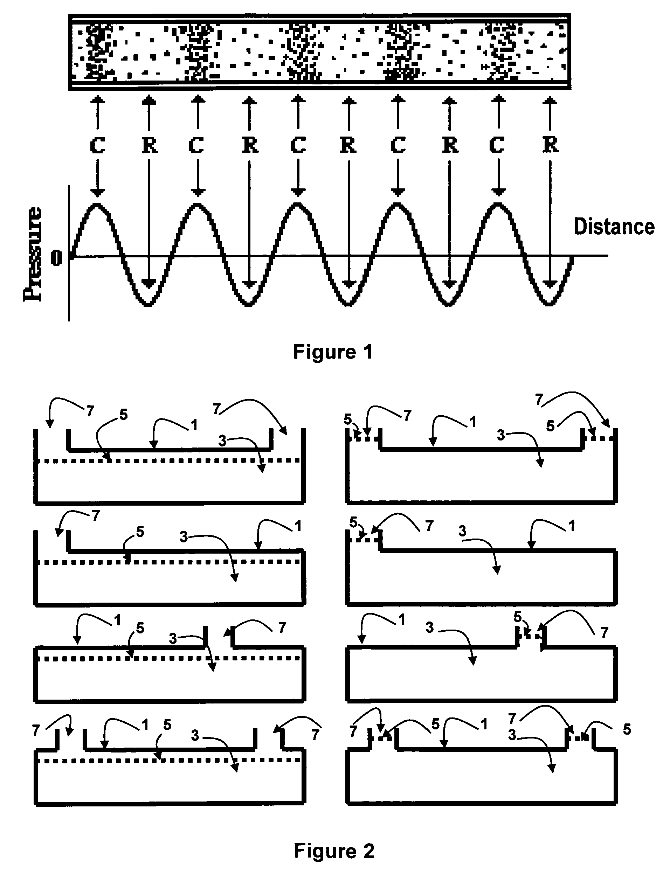

A number of high pressure cells for spectroscopic studies are known. US 5 949 536 relates to a high pressure optical cell for spectrometry; EP 0 433 044 concerns a high pressure sample holder for infrared (IR) spectroscopy. A high pressure cell apparatus with a multiple bevel culet geometry, suitable for pressures up to 5 Mbar is described in US 4 776 223. These devices rely on mechanical means to generate high pressures and are generally cumbersome to work with. Furthermore, they cannot support rapid pressure changes and they are not suitable for drug-screening purposes.
It is known that by application of an ultrasonic impulse, a longitudinal density (pressure) standing wave is rapidly established in a fluid within the resonator cell. This establishes a distribution of pressure conditions from nodal points of the standing wave (high local density) to opposite nodal points (low local density). A schematic representation of a standing, longitudinal acoustic wave is given in Figure 1.
Previous ultrasonic spectroscopy in liquids concentrated on measuring the sound velocity and absorption of acoustic waves in different chemical solutions. Several cell devices, but none with so small volume have been disclosed (Eggers and Kaatze (1996), Polacek and Kaatze (2001 + 2003). Chavanne et al (2001) studied ultra-sonic induced nucleation of solid He in liquid He. Aguiar-Ricardo et al (2004) studied the critical behaviour of mixtures of $CO_2$ and $CHF_3$ using a visual, acoustic high pressure cell.
In general, prior art teaches ultrasonic spectroscopy of liquids, which relies on measuring velocity and absorption of acoustic waves. The resonator cell of the present invention is not ultrasonic spectroscopy.
There is a need for new technological means for positive- and negative pressure spectroscopic studies of proteins and other biomolecules, as well as of pressure dependence of other chemical and biological processes in solutions. Especially, there is a need for technical means that can handle low volumes and low compound/sample quantities, e.g. during drug screening. Proteins can be de-natured by a pressure of a few hundred MPa. Accordingly, pressure denaturation is an important technique in the study of protein folding. In the past, protein pressure denaturation has relied on experimental observations before and after an all-or-nothing pressure change.

**Summary of the invention**

The present invention provides a pressure cell with which proteins, nucleic acids and other biomolecules can be observed by spectroscopic means across a continuous pressure differential. Especially, the design is simple, robust and flexible and allows for very small sample volumes and rapid pressure changes.
By application of an ultrasonic impulse, a longitudinal density (pressure) standing wave is rapidly established in a fluid within the resonator cell. This establishes a distribution of pressure conditions from nodal points of the standing wave (high local density) to opposite nodal points (low local density). The pressure dependent behaviour of compounds, such as biomolecules can then be observed by spectroscopic means in one continuous solvent volume across this distribution of local density states.
Thus, in one aspect of the invention, a resonator cell is provided for analyzing a fluid and/or a compound in a fluid, comprising means for creating an essentially standing, longitudinal acoustic wave within said fluid within a container adapted for spectroscopic observation. In one embodiment of the invention, a resonator cell is provided for analyzing a compound in a fluid comprising means for creating an essentially standing, longitudinal ultra-sonic wave in said fluid between two reflectors, characterized in that an essentially fluid-tight compartment is formed between said reflectors and the inner cell wall of a cylindrical glass tube, said glass tube comprising an area of transparency for electromagnetic radiation.
Another aspect of the invention relates to an analytical instrument for analyzing a compound in a fluid comprising a resonator cell, as well as sampling and cleaning means for consecutive analysis of individual samples.
A further aspect concerns a method for analyzing a compound in a fluid comprising a resonator cell according to the invention.
The present invention provides a technically simplified approach, suitable for small sample volumes, and rapid analysis, including dynamic studies and/or reaction kinetics.

## Brief description of the drawings

**Figure 1:** Schematic representation of an acoustic longitudinal wave in a fluid; C: compression (high pressure); R: rarefaction (reduced pressure).

**Figure 2:** Schematic representation of different embodiments of container suitable for a pressure cell comprising inlet- and/or outlet means

**Figure 3:** Schematic representation (profile cut) of an embodiment of a pressure cell.

**Figure 4:** Qualitative stability diagram of the protein, Zn-cytochrome c, in a buffer/glycerol mixture obtained from pressure experiments. The y-axis represents the pressure in MPa and the x-axis is temperature in Celsius.

**Figure 5:** Design of a pressure jumps cell, capable of containing several thousands of atmospheres.

**Figure 6:** A microwave cell constructed to be employed in variable applied microwave field, in a frequency range of 1-4 GHz.

**Figure 7:** A heating cooling cycle of the Betalactoglobulin in a urea solution. The y-axis represents the polarization of the light going through a thermal cell while the x-axis represents temperature in Celsius.

**Figure 8:** A Raman spectrum of the protein before (A) and after (B) exposing the protein to microwave of different power: 100, 400 and 800 W for 40 seconds).

**Figure 9:** A detailed response measurement of a peak at 137 KHz.

**Figure 10:** Illustration showing of the measured resonance response of the cell through the frequency bandwidth 0.01-3MHz.

**Figure 11:** Plot of two graphs showing $P\text{-}P_0$ ; high amplitude: distance $d$ equals a full number of half wavelength; low amplitude: distance $d$ is not equal to an integer number of half wavelength.

**Figure 12:** 3D graph showing the calculated beam diameter of the sound wave in between the two reflectors.

**Figure 13:** Illustration of the measured pressure at the focal point vs. the applied voltage on the cell.

**Figure 14:** Graph showing a measured Raman spectrum of a protein (β-lactoglobuline) in a water solution that is under the ultrasound focus.

## Detailed description of the invention

One aspect of the current invention relates to a resonator cell for analyzing a fluid and/or a compound in a fluid, comprising means for creating an essentially standing, longitudinal acoustic wave within said fluid within a container adapted for spectroscopic observation.

In one embodiment of the present invention, the means for creating an essentially standing, longitudinal acoustic wave comprise two reflectors. In an alternative embodiment, the standing wave is created by more than two reflectors. In a further embodiment, an even number of reflectors is used. In another embodiment, an uneven number of reflectors is used to generate an essentially standing, longitudinal acoustic wave. A reflector suitable for carrying out the invention may be planar, concave or plano-concave. Commonly, reflectors consist of or comprise glass, silicone, metal, brass, and may be coated with noble metals, e.g. gold, Teflonor brass. In an alternative embodiment, the reflector is a planar X-cut quartz transducer/receiver.

In order to allow for spectroscopic analysis, the container comprising the fluid and/or particle in a fluid to be analyzed comprises an area of transparency for electromagnetic radiation. In one embodiment of the invention, the wall of the container comprising the area of transparency for electromagnetic radiation may consist of or comprise glass, such as ordinary glass, laboratory glass, or quartz glass, (e.g. Schott glass). In another embodiment, the transparent area may consist of or comprise plastic, a polymer, polyethylene (PE), polyethylene terephthalate (PET), polypropylene (PP), polycarbonate (e.g. lexan), polyacryl, kevlar, mylar or the like, and/or a composite and/or a crystalline material. In a further embodiment of the current invention, the area of transparency is enclosed and/or defined by a surrounding layer of non-transparent material. The shape of such a window can be round, oval, super elliptic, square, triangular and the like. An optical window suitable for carrying out the invention may be wide enough to allow analysis of one or more nodal points and/or areas of relative pressure difference. The width of optical window can be defined as the largest diameter or diagonal across the optical window. In case of a non-planar window, the width could be measured when the optical window is projected onto a plane perpendicular to the central axis of excitation light or parallel to the detector unit.

A container holding the fluid or compound in the fluid to be analyzed of the present invention may comprise a cylindrical tube or near-cylindrical tube. In an alternative embodiment, the cross section of the tube is symmetrical and possesses an oval or even drop-like shape. In a further embodiment, the tube comprises areas that are flat or nearly flat at the bottom, and/or on the side, and/or on top. The tube may comprise essentially glass, or plastic, or metal or a combination of these.

The fluid according to the invention can be a gas or a liquid, such as water or an organic solvent, or a mixture of water and one or more organic solvents, or an emulsion, a solute, dispersion, a colloid, or a colloidal suspension. In another embodiment of the invention, the fluid contains gas, which can be dissolved, partially dissolved. In a further embodiment, the fluid comprises a two phase system, such as either two liquids, or a liquid and a solid, or a liquid and a gas.

The colloid or colloidal dispersion or colloid mixture according to the invention is defined as a substance with components of one or two phases. A colloid mixture is a heterogeneous mixture where very small particles or droplets of one substance are distributed preferably evenly throughout another substance. A colloid mixture's particles are for example between 1 nm and 1000 nanometers in diameter. The size of dispersed phase particles in a colloid range usually from one nanometer to one micrometer. Colloids according to the present invention comprise colloidal aerosols, colloidal emulsions, colloidal foams, or suspensions, emulsion or dispersions. These colloids may be colored or translucent because of the Tyndall effect, which is the scattering of light by particles in the colloid.

According to the invention, a fluid compound, or a compound in a fluid can be analyzed. Such a compound can be a chemical, either in pure or essentially pure form, or a mixture of two or more pure essentially pure chemicals. In another embodiment of the invention, such a compound may comprise one or more biomolecules, selected from the group comprising protein, protein complex, peptide, structural protein, enzyme, pro-enzyme, enzyme inhibitor, co-factor, enzyme activator, lipo-protein, glyco-protein, carbohydrate, polysaccharide, single- or double stranded nucleic acids such as DNA, RNA, PNA, lipid, fatty acid, drug, pro-drug, pharmaceutical or cosmetical compound and/or composition and the like, or any combination of the above. Such a combination may comprise ionic, physical or chemical linkage(s) or association(s). The biomolecules according to the invention may be of natural or synthetic origin, or modified, natural compounds.

According to the invention, a resonator cell suitable for carrying out the invention comprises means for creating an essentially standing, longitudinal ultra-sonic wave. In one embodiment of the invention, the resonator cell comprises a reflector. In another embodiment, the reflector is part of a reflector unit, said reflector unit comprising a planar or concave reflector, a transducer or receiver, a recoil mass, an electric circuit, as well as attachment and alignment means and a sealing device (e.g. O-ring). In a further embodiment, the resonator cell comprises two reflector units, namely one unit working as transducer, and the other unit working as receiver. In a further embodiment, the reflector units may act as receiver and/or transducer. A suitable transducer/receiver may be using piezo-electric, electrostatic, magnetostrictive, optical or photoacoustic effects.

The resonator cell of the current invention may provide a standing ultra-sonic wave, or an essentially standing ultra-sonic wave with a wavelength in the range from 0.02 to 2 cm. In another embodiment, the wavelength range is from 0.1 to 1 cm, or 0.2 to 0.5 cm. In order to generate these wavelengths, frequencies in the range of 0.1 to 3 MHz are generated in the resonator cell. In a further embodiment, the frequencies are in the range of 0.5 to 2 MHz, or 1 to 1.5 MHz.

A resonator cell according to the invention may generate an essentially standing, longitudinal ultra-sonic wave within an interval of 0 to 1 s, or 0 to 0.1 s, or 0 to 10 ms, or 0 to 1 ms, or 0 to 0.1 ms, or 0 to 10 $\mu$s, or 0 to 1 $\mu$s. According to one embodiment of the invention, it is advantageous that the standing wave is generated as rapidly as possible.

In another embodiment of the invention, the resonator cell provides the possibility to perform one or more frequency shifts between frequencies creating different, essentially standing, longitudinal ultra-sonic waves. Such a frequency shift can be accomplished within 0 to 10 s, or 0 to 1 s, or 0 to 0.1 s, or 0 to 10 ms, or 0 to 1 ms, or 0 to 0.1 ms, or 0 to 10 $\mu$s, or 0 to 1 $\mu$s. According to a further embodiment of the invention, it is advantageous that the standing wave is generated as rapidly as possible. In yet another embodiment of the current invention, two or more different frequencies can be generated simultaneously and if desired, independently. These different frequencies can be overtones, or physically unrelated frequencies, generated either by the same reflector unit(s), or one or more independent reflector unit(s).

In order to create the standing wave according to the invention, a power must be applied to the fluid via the reflector/transducer. The power range applied is in the range of 1 to 2.000 mW. In another embodiment, the power range is 10 to 1.000 mW, or 200 to 500 mW. The power applied may be variable and controllable, and relates to the amplitude of the oscillating reflector/transducer unit as well as to the frequency applied.

In order to control and/or avoid temperature related effects, a resonator cell according to the invention may comprise means for controlling temperature. Such temperature related effects may comprise changes of physical and/or chemical parameters of the fluid or the compound(s) to be analyzed. Some spectroscopic techniques involving infrared (IR) radiation are known to generate heat, and may lead to local changes in temperature of the sample. Likewise, the generation of the standing wave is expected to generate heat as well. In one embodiment of the present invention, the control means result in sample temperature variations below +/- 5 to 10 °C. In a further embodiment, sample temperature variations can be controlled to below +/- 2 to 5 °C or +/- 1 to 2 °C, or +/- 0.5 to 1 °C. Ideally, temperature variations can be controlled to be as small as possible, such as below +/- 0.5 °C. Apart from influencing the sample's physical and/or chemical parameters, temperature may influence the speed of sound in the fluid, and thus the frequency and/or the distance between the reflectors required to generate a standing wave,

Thus, according to the invention, a standing wave can be generated by adjusting/selecting an appropriate frequency, and/or by adjusting the distance between the reflectors, in between which the standing wave is to be formed. In one embodiment of the invention, the spacing between the reflectors can be adjusted or tuned. In one embodiment of the current invention, the spacing between the reflectors is can be tuned from 0.1 to 2 cm in increments of 1 nm to 1 $\mu$m. In another embodiment, the distance between the reflectors can be adjusted from 0.5 to 1 cm. In a further embodiment, the distance between the reflectors can be adjusted/tuned continuously or essentially without increments, or with increments below 1 nm.

The resonator cell capable of creating an essentially standing, acoustic wave may create one or more regions of relative pressure difference. The relative pressure difference can be defined as the difference in pressure between the fluid before generating the essentially standing, acoustic wave and the pressure at a defined point, area or region of the standing wave. Alternatively, the relative pressure difference can be the difference in pressure between two defined points, areas or region of the standing wave. Pressure differences generated may be negative, such as in the range of - $10^7$ to -$10^6$ Pa, or -$10^6$ to -$10^5$ Pa, or -$10^5$ to -$10^4$ Pa, or positive, such as in the range of $10^6$ to $10^7$ Pa, or $10^5$ to $10^6$ Pa, or $10^4$ to $10^5$ Pa.

According to the invention, regions or areas of relative pressure difference are generated. Typically, the volume of such a region of relative pressure difference is with the range of 0.1 to 1 $cm^3$, or 10 to 100 $\mu$l, or 1 to 10 $\mu$l, or 0.1 to 1 $\mu$l. In one embodiment, multiple regions of relative higher and lower pressure are formed.

A resonator cell according to the invention requires that the fluid, in which the standing acoustic wave is to be generated, is contained within a container. In one embodiment of the invention, the container can hold a sample volume in the range of 10 to 100 ml. In other embodiments, the container holds 1 to 10 ml, or 0.1 to 10 ml, or 10 to 100 $\mu$l. In another embodiment, the container comprises inlet and outlet means. In a further embodiment, the container comprises combined inlet/outlet means. In yet another embodiment, the container is adapted to cycles of filling and emptying. In yet a further embodiment, the container can be cleaned or washed with one or more rinsing liquids. In yet another further embodiment, the container can be flushed and/or supplied with a gas, such as air, dried air, inert gas, e.g. nitrogen or a noble gas such as He or Ar. Apart from flushing the container, the gas can be used to remove dissolved gasses or gas bubbles in the fluid to be analyzed.

A resonator cell according to the invention may also comprise means for applying an external pressure to the container and/or the fluid to be analyzed in the container. The external pressure may also be negative (vacuum), e.g. to degas the fluid to be analyzed. Positive pressure may be provided by the use of pressurized gas. In one embodiment of the invention, an external pressure in the range from range 1 to $10^9$ Pa can be provided and adjusted. In another embodiment, a pressure in the range of 1 to $10^6$ Pa, or 1 to $10^3$ Pa can be supplied.

An essentially fluid tight container of the pressure cell of the current invention may be formed between the inner surface of the wall of a cylindrical or near cylindrical tube and one, two or more reflector and/or reflector units. In one embodiment, an essentially fluid-tight seal is formed between the inner wall of a cylindrical tube and the reflector and/or reflector unit by the use of one or more O-rings, e.g. made of rubber or Teflon. In an alternative embodiment, a seal is provided by an adhesive layer of silicone rubber.

The tube may consist of or comprise glass, such as ordinary glass, laboratory glass, or quartz glass, (e.g. Schott glass). Alternatively, the tube may consist of or comprise plastic, such as polyethylene (PE), polyethylene terephthalate (PET), polypropylene (PP), polycarbonate (e.g. lexan), polyacryl, kevlar, mylar or the like. In a further embodiment, the tube is a metal tube. According to one embodiment of the invention, the tube forming the fluid tight container has a length of 0.5 to 20 cm, or 1 to 10 cm, or 2 to 5 cm, and possesses an inner diameter of 0.5 to 3 cm, or 1 to 2 cm. In another embodiment, the diameter of a round or nearly round, planar or concave reflector(s) is 0.5 to 3 cm, or 1 to 2 cm. In a further embodiment of the invention, the inner wall or a portion of the inner wall of the container or glass tube, and/or the surface of the reflector(s) is coated with a chemically inert, and essentially non-electromagnetic-wave-reflecting surface.

According to the invention, physical and/or chemical, pressure induced changes of the compound(s) to be analyzed in the fluid or the fluid itself are detected by physical and/or chemical detection means. Such means may comprise spectroscopic means, such as ultra violet (UV) spectroscopy, visual light, i.e. ~400 - 800 nm (VIS) spectroscopy, near infrared (NIR) spectroscopy (e.g. ~800-1100 nm), Fourier transformed infrared (FT-IR) spectroscopy > 800 nm, attenuated total reflectance (ATR) spectroscopy, Raman (scattering) spectroscopy, fluorescent spectroscopy techniques, Vibrational Circular Dichroism (VCD) spectroscopy, Optical Rotational Dispersion (ORD) spectroscopy, Raman Optical Activity (ROA) spectroscopy, Surface Enhanced Raman Scattering spectroscopy. In an alternative embodiment, the detection means may comprise NMR (nuclear magnetic resonance), measurement of pH, and/or conductivity. In another embodiment, two or more (spectroscopic) detection methods or means are used in parallel or consecutively. Spectroscopic detection means according to the invention may comprise transmittance, reflectance, transflectance, absorbance, and/or emission of electromagnetic radiation.

In order to carry out the invention, at least one optical window may be provided in order to allow the electromagnetic radiation to enter the fluid across the wall of the container. After interaction with the fluid and/or the compound in the fluid, the electromagnetic radiation exits the container through either the same or another optical window. In one embodiment of the invention, the optical window acts as an optical filter, and only a selected range of electromagnetic radiation can pass through the filter. The optical window of the invention may have a width of approximately 10 nm to 2 cm, or 10 $\mu$m to 0.5 cm, or 0.1 to 1 mm. The window may be flat or curved, e.g. following the curvature of the cylindrical tube being part of the container holding the fluid. In another embodiment, the tube consists of glass, said glass being transparent to electromagnetic radiation. One or more optical windows may be formed by providing coating or covering the glass tube with a non-electromagnetically transparent material. In an alternative embodiment, electromagnetic radiation is provided and/or collected by the use of optical fibers. In a further embodiment, the optical window consists of another material than the remaining cuvette/container/tube. Examples of such materials may comprise glass, quartz glass, (e.g. Schott glass), plastic, such as polyethylene (PE), polyethylene terephthalate (PET), polypropylene (PP), polycarbonate (e.g. lexan), polyacryl, kevlar, mylar or the like; the optical window may also comprise one or more crystals or crystalline compounds.

According to the invention, sources of electromagnetic radiation are UV, VIS or NIR emitters such as lasers, Xe-, Hg-, or halogen lamps, conventional light bulbs. Said emitters may comprise monochromators and/or filter means. Light detection means may comprise one or more diode detector arrays, PbS detectors, Si detectors, CCD cameras, photo-multiplier tubes or any other suitable detector(s) known in the art.

A second aspect of the invention concerns an analytical instrument for analyzing a fluid or a compound in a fluid. In one embodiment, the resonator cell comprises sampling and cleaning means for consecutive analysis of individual samples. In another embodiment, the container or cuvette comprises inlet and outlet means. Several non-limiting embodiments of a container/tube/cuvette with inlet- and outlet means are given in Figure 2. The cuvette (1) contains a fluid (3), with a meniscus or surface (5), depicted as stippled line. One or more reflectors and/or reflector units may be present within the cuvette, or may be part of the wall of the container. The container (1) can be filled and/or emptied through the inlet/outlet means (7). The fluid (3) can enter and/or exit through a combined inlet/oulet (7) or separate inlet (7) and outlet (7). A further embodiment of the invention relates to an instrument or apparatus suitable for analysis, screening or large scale screening of biomolecules. One or more relevant physical or chemical parameters are measured or predicted or assessed by such a device. Such parameters may comprise folding, unfolding, denaturing and/or renaturing, lipo - or hydrophylicity, membrane or transmembrane characteristics, partition and/or distribution coefficient, purity, concentration, stability, (quantitative) structure-activity relationship and the like.

The instrument according to the invention may also be useful for kinetic and dynamic studies. Pressure jumps, i.e. providing defined areas of pressure difference, can readily be achieved the acoustic pressure cell, as the latter is not subject to mechanical limitations. In one embodiment of the present invention, such pressure jumps can readily be achieved in the time scale from 0.1 to 10 ms.

An analytical instrument according to the invention may comprise (auto) sampling means, such as those as known in the art for HPLC, GC, mass spectrometry (MS) and the like.

A third aspect of the invention relates to a method for analyzing a fluid or a compound in a fluid by the use of a resonator cell. In one embodiment, one or more physical or chemical parameters of a fluid and/or compound are measured or predicted or assessed. Such parameters may comprise folding, unfolding, denaturing and/or renaturing, lipo - or hydrophylicity, membrane or transmembrane characteristics, partition and/or distribution coefficient, purity, concentration, stability, (quantitative) structure-activity relationship and the like. Furthermore, another embodiment concerns to a method of performing, monitoring, detecting and/or analyzing dynamic changes of the above parameters, including kinetic measurements.

A method of analyzing a fluid and/or compound in a fluid according to the present invention may also comprise the use of two or more, autonomous or non-autonomous pressure cells. These may be arranged in parallel or consecutively. In one embodiment of the invention, one pressure cell is used as control and/or reference. This reference or control may comprise a defined fluid, which may be the same or different from the fluid analysed in the one or more other cells. Examples of such a standard may comprise a defined chemical composition such as distilled water, organic solvents and the like, or a defined combination of two or more sovents, or a solvent comprising a defined quantity, concentration or portion of a compound or chemical composition. In an alternative embodiment, a reference pressure cell is used to compensate, monitor or correct for drift of relevant experimental parameters, such as drift in pressure, temperature, volume, intensity of electromagnetic radiation and the like.

All embodiments and examples presented in the actual description are not to be construed as limiting for the scope of the invention.

## Examples

### Example 1

*A resonator/pressure cell*

The resonator cell consists of an open glass tube with to reflectors at both ends, which are tightly fitted by O-rings. On these reflectors are glued transducers mounted with backscattering gold-plated brass reflectors. One transducer is used as an ultrasound source, the other as a receiver of the generated sound pressure. The O-ring design allows optimal transmission of the sound pressure. The inner length of the cell can be tuned to that for a standing wave at a given frequency. The amplitude of ultrasonic impulse, and, thus, the properties of the resulting standing wave, can be varied by adjusting the voltage setting on the transducer.

Figure 1 shows a schematic representation of an acoustic, longitudinal wave in a fluid.

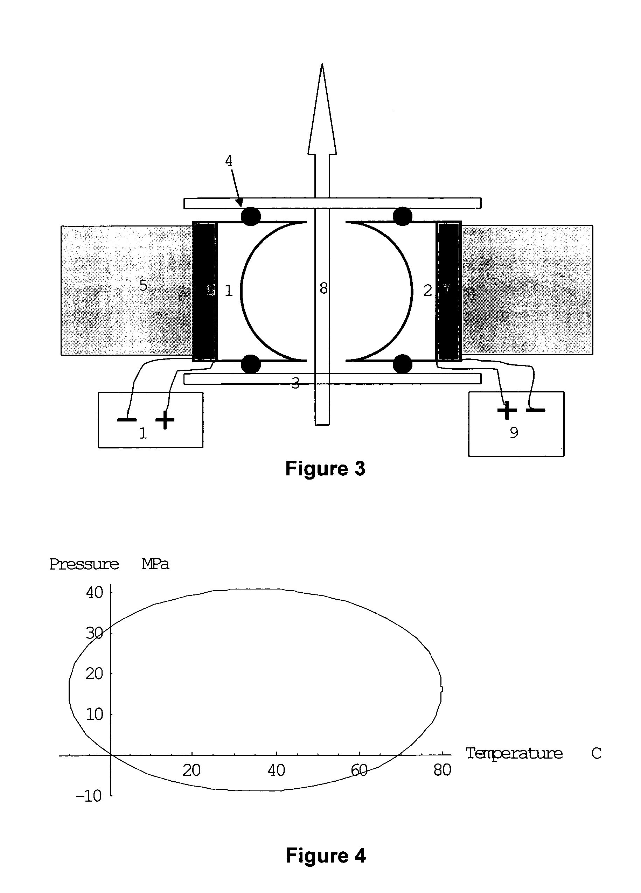

An embodiment of the pressure cell is illustrated in Figure 3, where a profile cut of the pressure cell is shown: (1) spherical reflector $R_1$, (2) spherical reflector $R_2$, (3) cylindrical glass tube, (4) O-ring, (5) recoil mass, (6) transducer, (7) receiver, (8) laser beam, (9) oscilloscope.

When an optical measurement is performed, for example a Raman spectrum measurement, the light beam is transmitted through the open distance between the two reflectors spectra. An inlet hole (optical window) into the glass tube is not shown.

### Raman spectroscopy

Raman spectroscopy is a spectroscopic technique commonly used in physics and chemistry to study vibrational, rotational, and other low-frequency modes in a system. It relies on inelastic scattering, or Raman scattering of monochromatic light, usually from a laser in the visible, near infrared, or near ultraviolet range. The laser light interacts with phonons or other excitations in the system, resulting in the energy of the laser photons being shifted up or down. The shift in energy gives information about the phonon modes in the system. Infrared spectroscopy yields similar, but complementary information.

Typically, a sample is illuminated with a laser beam. Light from the illuminated spot is collected with a lens and sent through a monochromator. Wavelengths close to the laser line (due to elastic Rayleigh scattering) are filtered out and those in a certain spectral window away from the laser line are dispersed onto a detector.

Spontaneous Raman scattering is typically very weak, and as a result the main difficulty of Raman spectroscopy is separating the weak inelastically scattered light from the intense Rayleigh scattered laser light. Raman spectrometers typically use holographic diffraction gratings and multiple dispersion stages to achieve a high degree of laser rejection. A photon-counting photomultiplier tube (PMT) or, more commonly, a CCD camera is used to detect the Raman scattered light. In the past, PMTs were the detectors of choice for dispersive Raman setups, which resulted in long acquisition times. However, the recent uses of CCD detectors have made dispersive Raman spectral acquisition much more rapid.

Raman spectroscopy has a stimulated version, analogous to stimulated emission, called stimulated Raman scattering.

### Example 2

*Different instruments for measuring external influences on protein folding/denaturation using various spectroscopic methods*

In this report, various novel instrument set-ups are presented for studying both protein folding and the denaturation processes. These instrumentations do also apply to other bio-molecules such as DNA. The most well known expositions of protein structures are those realized in X-ray crystallography and they provide us with great details about protein structures as frozen crystals. Similar details can be obtained in neutron scattering and NMR experiments for proteins in solutions but due to a long exposure time, crystallization and higher concentration of the native one, they lack the means of giving time-resolved expositions of dynamical events involving proteins such as the crucial protein folding and denaturation processes.

As mentioned above the optical measurements such as Raman Scattering, Fluorescence techniques, Vibrational Circular Dichroism, VCD, Optical Rotational Dispersion, ORD, Raman Optical Activity, ROA and infrared absorption spectroscopy can solve many of the mentioned obstacles due to the fact that optical techniques are non-invasive and can monitor proteins in their native environment and with accurate time resolution although with low spatial resolution. However, with the possibility of Surface Enhanced Raman Scattering, SERS, techniques proteins can be observed down to the single molecule level of nano-molar concentration and with a spatial resolution down to single amino-acids. Thus, optical techniques hold great promises for future investigations of the dynamics of proteins processes provided that proteins can be maintained in desirable and controllable sample cell.

In the next sections, the experimental cells are presented and discussed, which had been constructed for such experiments. Needless to say, in order to be able to construct a perfect cell for the purpose of elucidating a particular protein process such as protein folding, one must be able to understand what the conditions are for that process to occur and what the crucial parameters are for maintaining it. Therefore, in the following the conditions before presenting the various cells are mentioned.

*Protein Folding and Denaturation Experiments*

Ever since it was known that proteins do undergo a folding process resulting in a functional 3-dimensional structure after being synthesized in the cellular ribosome as linear chains of amino acids, attempts have been made to reproduce and study such folding processes in vitro, often occurring much slower than the in vivo folding of the order of a few seconds. Since it is costly to synthesize large proteins in laboratories one is almost in all cases going the opposite way, isolating particular folded native proteins and then sees if one can denature them and then refold the proteins again. This is the usual way in studying the protein folding process since it can be controlled. Such procedures are commonly done in laboratories once a desired protein is produced by recombinant cloning techniques, isolated and purified or simply purchased if available on the market. The next task is then to find denaturant agents that can denature or unfold the protein without destroying the structure. For most proteins a common denaturant is urea or guanidinium chloride in 4-8 molar solution. The next question is whether the denatured protein can refold again after removing the denaturant? That will often depend on the denaturation process. If concentration and temperature are too high one will often end up with aggregated forms of the proteins with no functional activity left. Hence, low temperature denaturation is preferable for refolding experiments where the native, active form of the protein is to be retrieved. Thus, the next question of cold and hot denaturations of proteins will be discussed in the next section.

A theory is mentioned briefly, of how one can consider the denatured processes of proteins as a change in their intrinsic dynamics. Most biological chain molecules, as for example proteins, are not closed but linear. The linear molecule can be folded and packed into complex and dense geometrical structures. Also linear molecules can sustain collective excitations over a range that exceeds the persistence length of the molecular backbone and possibly extend to the entire molecule. The persistence length measures a thermo dynamical average. For a single molecule it takes a certain time before a representative set of conformations of the molecule have been scanned. Had the molecule been in vacuum and had there been no dissipative forces the time between conformations could be very short, but proteins are in a viscous aqueous environment. Large motions of the backbone occur on the order of a millisecond. On shorter time scales the apparent persistence length is therefore significantly longer than the thermo dynamical average. In fact, the apparent persistence length diverges when the time scale goes to zero.

*Hot and Cold Denaturation*

Many proteins exhibit several ways of denaturing depending on the temperature, pressure or pH. For example as a function of temperature many proteins exhibit three phases: Cold denatured protein, native (folded) phase, and hot denatured protein. The denotation of the phases is self explanatory. Though it is well known that proteins denature when heated, it is generally not known outside the community of protein specialists that many proteins denature upon cooling. In statistical science it is appreciated that order is decreased upon an increase in temperature but generally order is enhanced upon cooling. Likewise, to many scientists it will be a surprise to learn that some proteins will denature when the pressure is raised to about 1000 atmosphere. A schematic phase diagram is drawn in Figure 4. It illustrates the folded and denatured states of the protein in the temperature pressure phase space and shows the qualitative stability diagram of the protein, Zn-cytochrome c, in a buffer/glycerol mixture obtained from pressure experiments. The y-axis represents the pressure in MPa and the x-axis is temperature in Celsius. Inside the ellipse the protein is in its native state, outside in the denatured state. The $\Delta S=0$ (S being entropy) line cuts vertically at T=30 dividing the ellipse into tw0 sections. The left part being $\Delta S<0$ and the right hand side $\Delta S>0$. It is an empirical observation that heat is consumed during transition from the cold denaturation phase to the folded phase, as well as, from the folded phase to the hot denaturation phase. This is consistent with the situations encountered in the experiment with microwave radiation where the protein in solution has three phases with exothermal and endothermal transitions connecting them. However, successive transitions of increased temperature will involve an increased intrinsic activity. It is important to realize that a phase analysis based on Figure 4 should not only be concerning folding and denaturation but also stability of protein conformation. In the cold denatured phase there is insufficient structural activity to maintain the folded structure, while in the hot denatured phase the structural activity will reverse the folding process leading to denaturation of the bended structure, and for some proteins it may make aggregation among different molecules favorable. The intrinsic structural activity of the proteins is, according to theory, a result of topological excitations, so-called wringmodes, of linear chain molecules.

Molecular resonators are thought to be molecules whose intrinsic modes can resonate, or transfer twist mode to the protein backbone. The phenomenon that molecules can transfer twist modes to proteins is an alternative way for an interaction to take place to the building up of an external field. That these so-called molecular resonators can play an important role in the folding processes of certain proteins has been seen in various refolding experiments although the explanation that is offered above for the role in terms of twist modes is not fully proven. Usually such important "seeds" for the folding process are called pro-peptides; as they are synthesized in connection with the poly-peptide backbone.

A good example of such phenomenon is the refolding of the Alphalytic protenase, a Serine protease that only can attain its functional native state during refolding experiments if samples of the corresponding pro-peptide are added to the solution in which the protein folding occurs.

*Denaturation of Proteins by Various Mechanisms*

Below is given several examples of the various ways proteins can denature:

- Temperature denaturation
- Pressure denaturation
- Denaturation by electromagnetic radiation
- Denaturation by pH variation
- Chemical denaturation

It is within these fields of denaturation phenomena that the experiments have been made. There is still not a clear understanding or reason on the molecular level of what goes on in protein denaturation. However, one might argue, thermodynamically speaking (as a complement to the topologically picture above), that the entropy plays an important role in especially the chemical and pressure denaturation process. One expects that the water molecules are forming a tight caging (bound water) just around the protein while further away the water molecules are structured in a kind of ordered network with low entropy. In the case of pressure denaturation the rate of water collision goes up as the temperature is raised at constant volume. This is seen from the standard ideal gas equation: $PV = nRT$ which is used when treating protein and water solvent molecules as an ideal gas. With the breaking of H-bonds of the inner caging of bound water, protein unfolding and exposure of hydrophobic side-chains is obtained. One might propose that at diminished pressure and low temperature may have a similar effect of unfolding, but this time the lower collision rate of water causes the protein to fold out, but, apparently also maintaining order in the water structure

*Construction of Special Cells for Denaturation Experiments*

In this section, the design and construction of the sample cells is presented, which are used for the experiments on protein folding. These sample cells are to be used for optical facilities such as lasers and detectors that can produce the desired spectra, e.g., Raman.

*Thermo-bath*

This sample cell is meant to be in conjunction to a laser set-up for measuring the Optical Rotational Dispersion, ORD, by having polarizers and lenses on both sides of the cell measuring and recording the rotation of the optical plane when the laser beam is passing through the cell. It has the dimensions of a few centimeters. The cell is novel in the sense that it allows a careful adjustment and control of the temperature and thus being able to record a complete thermo-cycle of heating and cooling of an unstable protein in solution thus going from cold denaturation through the folded native state to the hot denatured state and back again to the cold denatured state. The sample cell has the possibility of applying microwave radiation to the protein sample while maintaining a fixed temperature and monitoring the heat transfer.

*Pressure Cell*

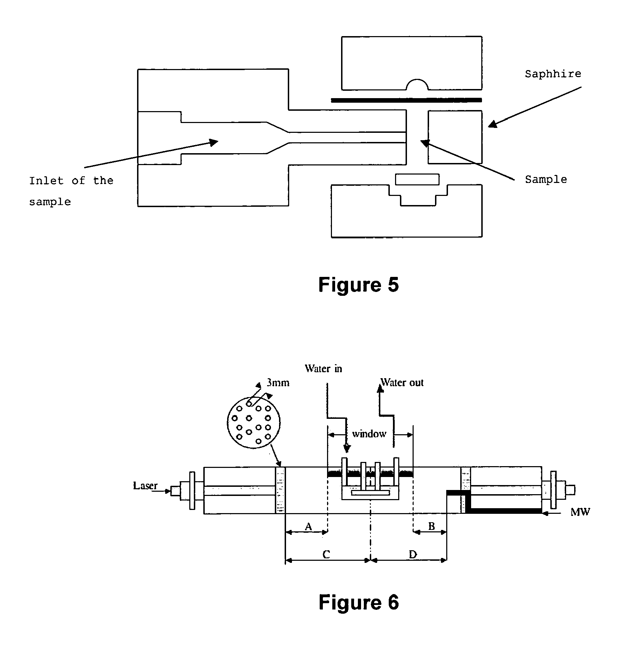

The pressure cell constructed here is build for pressure of several thousands of atmospheres such that pressure denaturation of proteins can be studied. The pressure cell is designed to make a pressure jump by suddenly breaking a window in the cell. Thus the pressure can be arranged to decrease rapidly from 1000 to 1 atmospheric pressure. The high-pressure cell is illustrated in Figure 5 and it is at the moment being used in fluorescence experiments.
Figure 5 shows a design of a pressure jumps cell, capable of containing several thousands of atmospheres and capable of delivering qualitative data as explained in the phase diagram (Figure 4). The dimensions are of few centimeters. High pressure generated outside the cell, is connected through a tube like cavity leading to the central chamber which contains the sample. The chamber is surrounded by steel blocks that press the cell together with a sapphire window to the right through which a laser beam can be transmitted for detection. The dark plat on the upper part is broken at critical pressure above the denaturation point and then leading to refolding of the protein to be observed by Raman scattering.

*Microwave Cell*

A very novel apparatus cell has been constructed for monitoring structural changes of proteins at the same time as changes are made in temperature and frequency of applied electromagnetic radiation. In previous experiments it has been demonstrated that proteins can undergo structural conformational changes when microwave radiation is applied at frequencies around 2 GHz. Thus, it has been natural to construct an apparatus cell for protein refolding experiments that can operate with EM radiation in the region of a few Gigahertzes and with temperature changes.
The microwave cell is designed to be employed in variable applied electromagnetic fields, i.e., for different frequencies (1-4 GHz). Figure 6 shows a microwave cell constructed to be employed in variable applied microwave field, in a frequency range of 1-4 GHz. This can be achieved by varying the cavity (A+C and B+D) of the tube. This is controlled by varying the central cavity length (A+C and B+D), and the frequency range, which could be employed here without losing the efficiency of the microwave. The protein cell is designed in such a way that the heat effect could be controlled. This is done by having two quartz tubes, mounted coaxially, where in the inner one the protein is inserted, while cold water is running constantly in the outer tube. A laser beam is focused on the centre of the inner cell and a Raman spectrometer and a detector is placed 90° to the tube window. Raman spectra were recorded using BioTools state-of-the-art Chiral-Raman instrument which utilizes 532 nm laser source and a CCD detector. The laser power applied here was 250 mW and the spectrum was recorded for 20 min.

*Acoustic Cell*

Broad-band ultrasonic absorption and velocity measurement in liquids, including water-protein solutions have been made in the last decades. Presently, an acoustic cell and detection apparatus is consructed to measure the absorption of sonic wave in proteins solution while controlling their surrounding temperature. The temperature is used as a mechanism to derive denaturation in Betalactoglobulin. As a result it is expected to observe a change in the ultrasonic absorption spectrum. It is hoped that the kinetics of the protein under different temperatures could be related to the temperature dependent absorption spectra.

*Results of Experiments with the Cells Verified by Spectroscopy*

Finally, some of the results of working with these cells are presented. The results are mostly given as spectra from Raman scattering and of ORD spectra.

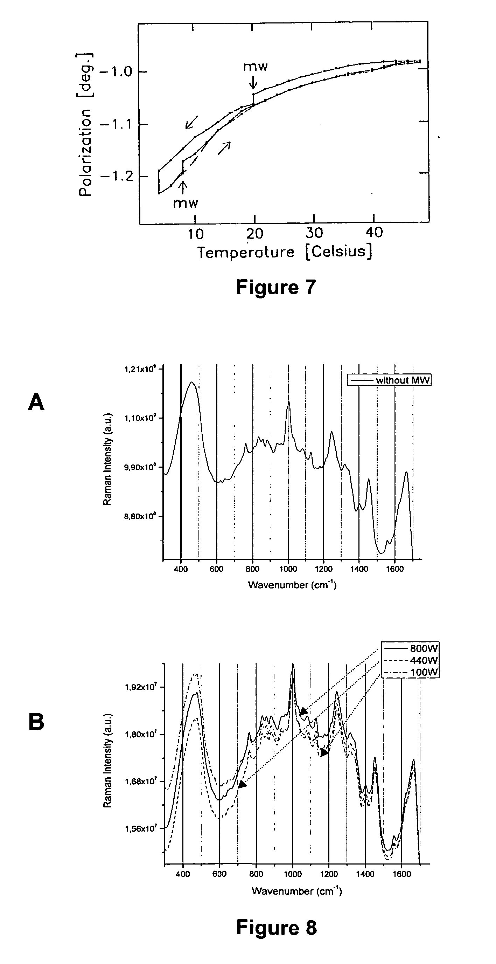

In Figure 7 is shown a heating-cooling cycle measured from the thermo-bath cell as explained above. The y-axis is showing the polarization of the light while the x- axis is representing the temperature ranging from 10 degrees Celsius (the cold denatured state) through 25 degrees (the folded native state) to 45 degrees (the hot denatured state) and then back again to 10 degrees. The Betalactoglobulin protein sample is in a solution of 0.5 M KCl and 4 M Urea at a pH of 3 in total. This solution made the protein exhibit both a hot, native and cold denaturation state depending on the temperature. Microwave is applied at 8 oC in the heating and at 20 oC in the cooling cycle. The dashed line corresponds to a heating-cooling cycle with no microwave irradiation; the full line represents ORD data obtained from the effect of applying 2.24 GHz microwave irradiation during 15 seconds at 8 and 20 degrees Celsius while the dashed line represents ORD data without irradiation. The curves clearly showed that the microwave irradiation had a profound non-thermal effect on the structure of the protein enhancing respectively the folding and denaturing process in the heating cooling cycle. The little change in activity corresponds to a factor 100 in reaction rate increase.
Figures 8 reveals a Raman spectrum of the protein before (a) and after (b) exposing the protein to microwave of different power: 100, 400 and 800 W for 40 seconds). The spectrum was detected using a BioTool ChiralRaman instrument, where a 532nm laser source and a CCD detector are mounted to the spectrometer. Raman spectra recorded during experiments with the microwave cell. The different curves of Raman spectra represent microwave exposure of the protein sample at a frequency of around 2 GHz. The protein sample was again Betalactoglobulin but dissolved in Q-mill water since a solution containing Urea would create disturbing fluorescence. The curves show minor changes but an intensity variation especially around the band 420-440 cm-1 (signifying secondary structure changes), depending on the power that was used for the microwave radiation.

The present study shows how one can construct sample cells for optics measurements of protein folding that in principle can give insight into the structural changes of proteins occurring in the folding/denaturation processes. This is achieved by rather simple means of cell construction when combining variation of thermodynamical parameters (temperature, pressure etc) with in situ optical spectroscopy of a non-invasive nature, such as ORD and Raman scattering.

Example 3

A miniature cell ($1cm^3$) induces an oscillating pressure in the chemical solution by focusing a sonic wave (0.1-3MHz) into a relatively small spot from two concave spherical surfaces. The superposition of reflections of the sonic waves focuses and stabilizes at an eigen mode therefore greatly enhances the amplitude of the pressure wave at the focus spot. To detect signals by one of the spectroscopic methods mentioned above, a detection slit is provided in between the two concave surfaces. The spectrum of the scattered light from the focus spot is measured continuously.

*The experimental system*

The experimental system is sketched in Figure 3. It is composed of two subsystems: A resonator pressure cell and a detection system. Figure 3 illustrates the pressure cell coupled to a Raman spectrometer, i.e. a laser beam (8) is transmitted through the focus spot of the cell.

The pulse generator induces a harmonic voltage V = $V_0$ sin($2\pi \nu t$)on a piezoelectric crystal. The electric voltage induces mechanical stress on the piezoelectric crystal and in response it oscillates mechanically to generate spherical wave fronts via the coupled concave spherical surface element $R_1$. The spherical element $R_2$ functions as a receiver to detect the water pressure at its surface and also as a reflector.

If the two spherical reflectors are properly aligned so that the generated wave front at $R_1$ is reflected from $R_2$ and reproduces the same wave front and phase at $R_1$ (with proportional amplitude), then a standing wave is generated in the cavity with an amplified amplitude.

Example 4

*Characterizing the operation of the resonator/pressure cell*

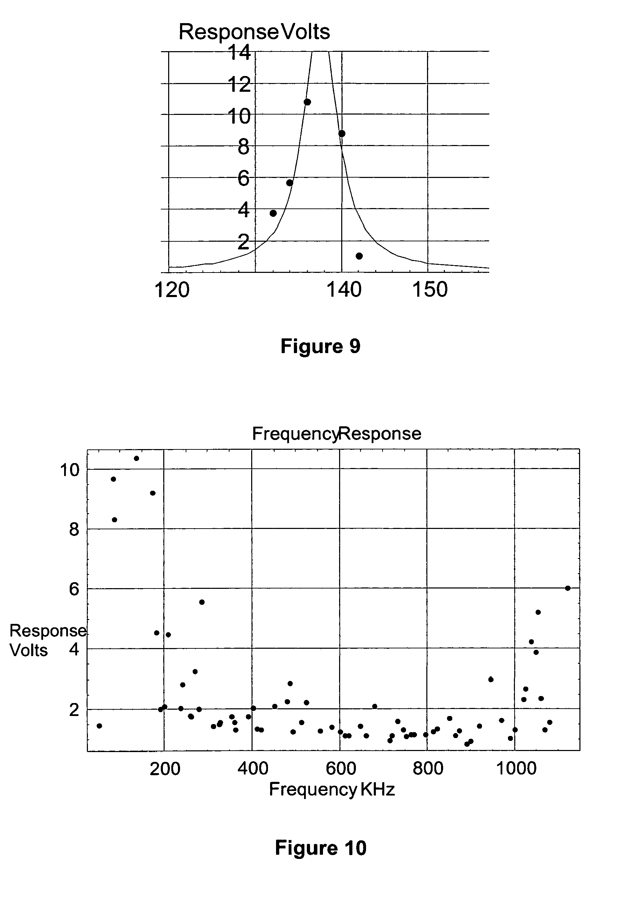

Figure 9 shows a detailed response measurement of a peak at 137 KHz. Figure 10 illustrates the measured resonance response of the cell through the frequency bandwidth 0.01-3MHz. The measurements were taken by applying an oscillating 20-Volt Peak amplitude voltage on the transducer while registering the induced voltage on the receiver. There are several factors that contribute to the observation of a resonance peak and its shape:

- Acoustic and electro-mechanical eigen mode of the piezoelectric crystal. It depends on the geometrical shape of the crystal and its elastic tensor.
- Acoustic resonance (eigen mode) of each cell element (such as the recoil masses and the reflectors).
- Acoustic resonance in the solution (the cavity): The length of the cavity corresponds to an integral number of the half wavelength.
- Electric resonance of the driving pulse generator and circuitry as it is coupled with the piezoelectric crystal.
  A precise model for describing the response shape (Figures 9 and 10) of the cell in the term of pressure dynamics due to the vibrations of the piezoelectric crystal would have to consider separately the vibrations of each component that the cell consists of. The effects of reflection (transmission), absorption and scattering from each medium (component) and the surrounding (air and supporting lab table) would have to be considered. Such a detailed model could be of great complexity, but is attainable. It is hoped to be developed in later studies. It is required for a precise model to estimate the pressure at the focus of the cell.

Example 5

*A model to calculate the pressure in the cell*

To obtain a basic insight, the fluid is considered to obey a linear wave equation, also at the focus point (i.e. the nonlinearity of the fluid is neglected). The fluid is considered to be lossless and ignore the effects of gravity (hydrostatic pressure) and shear forces (viscosity). Under such restriction the acoustic linear wave equation describes the hydrodynamics of the fluid.

First, a simple boundary condition is considered: Two parallel reflecting infinite planar surfaces at distance $d$ apart where plane $R_1$ is also a source of a linear plane wave with reflectance $r$.

The plane $R_1$ is oscillating according to $\Delta z = \Delta z_0 \sin(2\pi v t)$ in response to the voltage that is applied to the piezoelectric crystal: $V = V_0 \sin(2\pi v t)$. $\Delta z_0$ is the distance from equilibrium at voltage $V = V_0 = 20$ and $v$ is the frequency of the driving voltage. The change of position $\Delta z$ of plane $R_1$ is negligible compared to the sound wavelength $\lambda$ and the distance $d$ between the two planes, $\Delta z$ is in the order of few microns.

The pressure will have the following form: $P(z,t) = P_0 + \Delta P_0 \sin(kz - 2\pi v t)$

Where $P$ denotes the total pressure, $P_0$ denotes the pressure at equilibrium (1 Bar) and $\Delta P_0$ denotes the amplitude of the sound pressure oscillation. The resulting pressure at point $z$ will be a superposition of the source wave with its reflections.

The ratio is taken between the incoming amplitude of the pressure and the reflected amplitude of the pressure to be $p$ with a phase shift of $\beta$. Then the total pressure at $z$ would be a standing wave. It equals the hydrostatic pressure plus the pressure due to the sound wave $\Delta P_0 e^{i(kz-2\pi v t)}$ with all its reflections. The sum of all the reflections can be expressed as the sum of an infinite geometrical series and thus:

$$P = P_0 + \frac{\Delta P_0 \cos(2\pi v)t\left(\cos(kz) - \rho^2 \cos(kz + 2kd - 2\beta)\right) + \rho \cos(kz) - \rho^3 \cos(kz 2kd + 2\beta)}{1 - 2\rho^2 \cos(kd + 2\beta) + \rho^4}$$

When the distance between the two reflectors equals an integer number $N$ times a half wavelength: $d = N\dfrac{\lambda}{2}$

the expression of the pressure becomes

$$P = P_0 + \frac{\Delta P_0 \cos(2\pi v t)\cos(kz)}{1 - \rho}$$

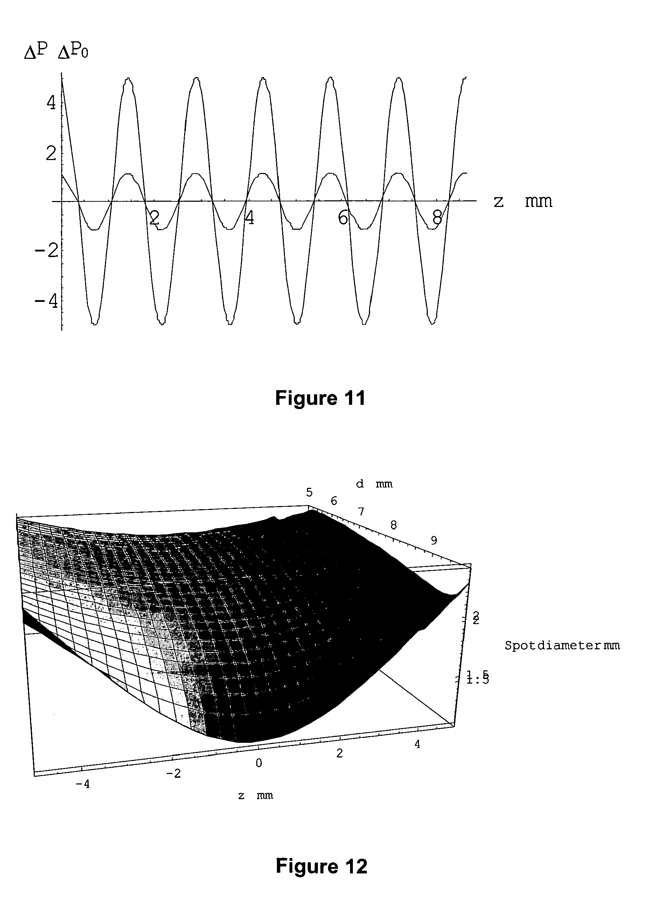

Figure 11 is a plot of two graphs. The plot with the high amplitude shows $P - P_0$ between $R_1$ and $R_2$ at a fixed time ($t$=0) with reflectance $\rho = 0.4$, a distance d that equals a full number of half wavelength and $\lambda = 1.44$ mm ($v = 1$ MHz). The second plot at the same figure shows $P - P_0$ when the distance $d$ is not equal to an integer number of half wavelength ($d = 6mm$).

The cell under study has two finite size reflectors that focus the waves into a spot. From wave theories it is known that one cannot focus a wave to a spot smaller than its wavelength. Therefore an approximation to estimate the effect of focusing would be the ratio $\dfrac{a}{\pi\lambda^2}$ where a is the area of the reflector.

For the cell under consideration $\dfrac{a}{\pi\lambda^2} = \dfrac{\pi 5^2}{\pi(1.4)^2} = 12$.

When $d = N\dfrac{\lambda}{2}$ ,, the amplitude of the standing wave can be found to be:

$$P_0 + \Delta P_0 \frac{1}{1 - \rho}$$

And therefore a useful expression for the gain $G$ of the sound wave pressure that is achieved by such a construction could be:

$$G = \frac{v^2 \Delta P_0 a}{\pi c^2} \frac{1}{1-\rho} = 20$$

Where $v$ is the frequency of the wave and $c$ its velocity ($c = 1440^m/_s$ in water). It is a useful formula for considerations of design.
The above model could be improved if one considers the problem of two concave spherical reflectors, $d$ mm apart. The wave equation yields a
Gaussian beam solution. It is characterized by a circular profile with a diameter $w$ (beam waist) where $w^2 =$

$$\frac{d\lambda}{2\pi} \left( \frac{1 - R/_d}{1 + R/_d} \right)^{\frac{1}{2}}$$

Figure 12 shows the calculated beam diameter in between to reflectors ($R_1 = R_2 = -5$ mm) for several separations between the two reflectors. The wave frequency is $v = 10^6$ Hz (in water where $\lambda = 1.44$ *mm*). In order to estimate the pressure at the focus spot, one should use w instead of a for the area.
If the separation between two identical concave reflectors equals 2 R mm and the slit between them is negligible, it is more appropriate to use spherical sound waves. In analogy to two reflecting plane waves, the total pressure would be a sum of the hydrostatic pressure $P_0$ plus the sound wave and its reflection. It is found to be the same as the case of plane wave but with amplitude $\dfrac{\Delta P_0}{r}$. When diameter of the sphere corresponds to an integer sum of wavelength of the sound wave, the expression for the total pressure becomes:

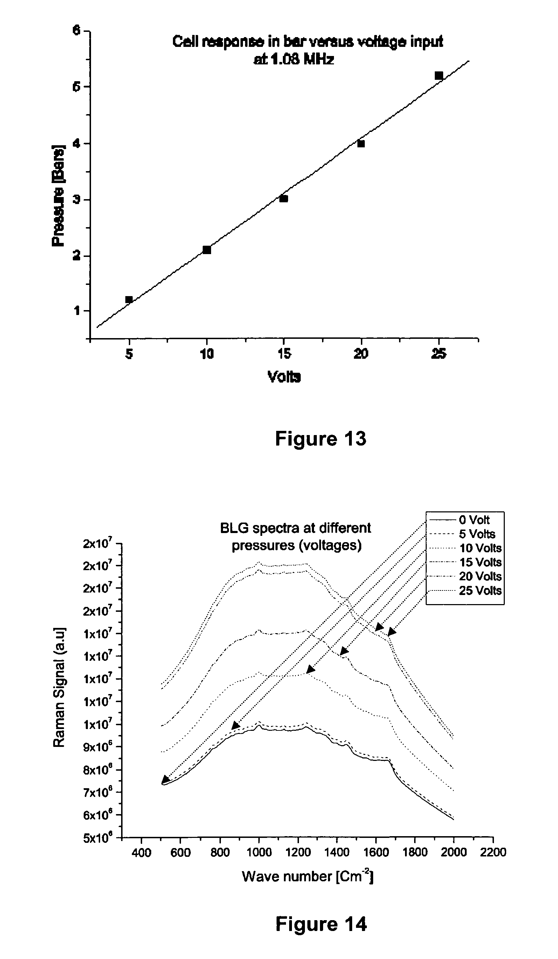

$$P = P_0 + \frac{\Delta P_0}{r} \frac{\cos(wt)\cos(kr)}{1-\rho}$$ . One can see that it is singular at $r = 0$, indicating that in reality the pressure there is very high. This approximation should be considered when working with a cell that is almost a close sphere.
Figure 13 illustrates the measured pressure at the focus of the cell vs. the applied voltage. It was measured by a1 mm needle for pressure detection in water (Miller detector) that was placed at the focal spot. At 20 Volts, a positive pressure of 5 bars (4 negative) was measured. It is lower from the expected pressure due to absorption and due to the disturbance caused by the needle to build a resonance at the focal waist.
Figure 14 illustrates a measured Raman spectrum of a protein (β-lactoglobuline) in a water solution that is under the ultrasound focus. The results clearly show an effect. The spectrum depends upon the pressure at the focal waist. The interpretation of the spectrum under ultrasonic pressure would be the object of further studies.
The spectrum dependency upon the oscillating pressure, which was observed for a protein (β-lactoglobuline), indicates that such measurements have a potential to yield new information. This information requires a consistent theory and various supplemental experiments. It is the theme for ongoing experiments. Of great importance in these measurement are three time parameters: The excitation time $\tau_e$, the detection time $\tau_d$, the period of the ultrasonic wave $\tau_{us}$ and the period of the molecular process that is under study $\tau_m$. These time periods would have to be incorporated into the microscopic theory of the measured phenomenon under study (scattering, fluorescence, NMR etc). The cell could be optimized and adjusted, in terms of size and materials to increase the pressure at the focal waist and adjust it to a particular detection method.

Example 6

*Raman spectroscopy reveals ultra sound effects in protein folding/denaturation*

In an ultra-sound acoustic pressure cell, where density waves are induced by a voltage controlled membrane, a strong effect is observed in the composition of secondary structures for protein in solution using Raman scattering spectroscopy. Especially, a transition from beta-sheet to alpha-helix structures is observed which is attributed to a change in the H-bond formation between the protein and surrounding water molecules and driven by entropy changes. This is in spite of the fact that the acoustic wave only induces a pressure change in the solute of ±0.5 atmospheric pressure.

*The thermodynamics of protein folding/denaturation experiments*

The basic fact is that proteins are observed to change secondary structure composition when being exposed to ultra sound waves. How can this be explained? Such phenomena seem only to be explained by entropy effects. It is thus phenomena that should be explained by thermodynamical potentials. Let us try to describe how to estimate the change in entropy.

The free energy of Helmholtz, F, is minimum for change at constant V and T. F=E-TS, and H=E+PV, so G=H-ST= E+PV-ST. Gibbs energy G is minimum for changes at constant P and T.

It is surprising to realize that the entropy for a certain structure is decreasing as a result of such an ultra-sound wave. It is imagine that one is dealing with a 2 phase system with 2 structures A and B with Gibbs energy and chemical potential $G_A$, $my_A$ and $G_B$, $my_B$

As a result of the oscillations it is expected: dG= my-A(W) dn-A(W) + my-B(W) dn-B(W) + my-A(p) dn-A(p)+ my-B(p) dn-B(p) + VdP - SdT - dSP = (my-B(W) - my-A(W)) n-W + (my-B(p) - my-A(p)) n-p, where W relates to water and p to protein. Thus, it is expected that the transition from one structure A to another structure B is driven by the change in chemical potential my caused by the density wave induced.

In the present case, a change in density $dn_i/dt$ is giving rise to a change in P. In the cell, it is assumed that V and T are constant. A change in P then gives rise to a change in S. How then to estimate S. Here the Boltzmann formula shall be used $Sum_i P_i logP_i$ which mounts to around 100 Kcal/mol for an alpha helix at T=300 K. This is estimated for the Ramachandra plot, which gives the allowed or statistical regions of values for structural patterns in proteins. The beta-sheets will have larger entropy, typically 150 Kcal/mol, at similar temperature. This is also understood since the beta-sheets have a larger flexibility in their H-bond structure. The calculation of entropy from Log P, or as it should be here: $S_{chain}$ = R. In W, where R is the gas constant and W is the probability for encountering a given conformation, be it a secondary structure pattern. This W can be estimated from the Ramachandran plot or similar dihedral angular probability maps.

So if beta-sheets are driven to change to alpha-helix structures the entropy change, delta S, is negative, e.g. decreasing for the protein structure but compensated by a positive entropy change of the bound water structure. Thus water will, due to the acoustic wave, form a looser structure around the protein. It roughly also corresponds to the change of the H-bonds number.

**Claims**

1. A resonator cell for analyzing a fluid and/or a compound in a fluid, comprising means for creating an essentially standing, longitudinal acoustic wave within said fluid within a container adapted for spectroscopic observation.

2. A resonator cell according to claim 1, wherein said standing, longitudinal acoustic wave is created between at least two reflectors.

3. A resonator cell according to claim 1 or 2, wherein said container comprises an area of transparency for electromagnetic radiation.

4. A resonator cell according to any of the preceding claims, wherein said container comprises a cylindrical glass tube.

5. A resonator cell for analyzing a compound in a fluid comprising means for creating an essentially standing, longitudinal ultra-sonic wave in said fluid between two reflectors, **characterized in that** an essentially fluid-tight compartment is formed between said reflectors and the inner cell wall of a cylindrical glass tube, said glass tube comprising an area of transparency for electromagnetic radiation.

6. A resonator cell according to any of the preceding claims, wherein said fluid is selected from the group comprising water, an organic solvent, a mixture of water and one or more organic solvents, an emulsion, a solute, a dispersion, a colloid, or a colloidal suspension.

7. A resonator cell according to any of the preceding claims, wherein said compound is a biomolecule.

8. A resonator cell according to any of the preceding claims, wherein said means for creating an essentially standing, longitudinal ultra-sonic wave comprise a reflector unit, said reflector unit comprising a planar or concave reflector, a transducer or receiver, a recoil mass, an electric circuit, as well as attachment and alignment means.

9. A resonator cell according to any of the preceding claims, wherein the standing ultra-sonic wave has a wavelength in the range from 0.02 to 2 cm, or 0.1 to 1 cm, or 0.2 to 0.5 cm.

10. A resonator cell according to any of the preceding claims, wherein a frequency is applied in the range of 0.1 to 3 MHz, or 0.5 to 2 MHz, or 1 to 1.5 MHz.

11. A resonator cell according to any of the preceding claims comprising means for generating said essentially standing, longitudinal ultra-sonic wave within 1 s, 0.1 s, 10 ms, 1 ms, 0.1 ms, 10 $\mu$s, or 1 $\mu$s.

12. A resonator cell according to any of the preceding claims, wherein a frequency shift between frequencies creating different, essentially standing, longitudinal ultra-sonic waves can be accomplished within 10 s, 1 s, 0.1 s, 10 ms, 1 ms, 0.1 ms, 10 $\mu$s, or 1 $\mu$s.

13. A resonator cell according to any of the preceding claims, wherein two ore more frequencies can be generated simultaneously.

14. A resonator cell according to any of the preceding claims, wherein a power is applied to the fluid in the range of 1 to 2.000 mW, or 10 to 1.000 mW, or 200 to 500 mW.

15. A resonator cell according to any of the preceding claims, comprising temperature control means, resulting in sample temperature variations below+/-5 to 10°C, or +/- 2 to 5 °C, +/- 1 to 2 °C, +/- 0.5 to 1 °C or below +/- 0.5 °C.

16. A resonator cell according to any of the preceding claims, wherein the means for creating an essentially standing, longitudinal acoustic wave comprise an adjustable spacing between the reflectors.

17. A resonator cell according to claim 16, wherein the spacing between the reflectors can be tuned to 0.1 to 2 cm, or 0.5 to 1 cm in increments of 1 nm to 1 $\mu$m.

18. A resonator cell according to any of the claims 1-4, 6-17, wherein said container adapted for spectroscopic observation comprises an essentially fluid-tight seal comprising an O-ring between reflector and/or reflector unit and the inner surface of a cylindrical glass tube.

19. A resonator cell according to any of the preceding claims, wherein a region of relative pressure difference is created in said fluid, said region of relative pressure difference is in the range of $-10^7$ to $-10^6$ Pa, $-10^6$ to $-10^5$ Pa, or $-10^5$ to $-10^4$ Pa.

20. A resonator cell according to any of the preceding claims, wherein a region of relative pressure difference is in the range of $10^6$ to $10^7$ Pa, $10^5$ to $10^6$ Pa, or $10^4$ to $10^5$ Pa.

21. A resonator cell according to any of the preceding claims, wherein a volume of a region of relative pressure difference is in the range of 0.1 to 1 cm3, or 10 to 100 $\mu$l, or 1 to 10 $\mu$l, or 0.1 to 1$\mu$l.

22. A resonator cell according to any of the preceding claims, wherein multiple regions of relative higher and lower pressure are provided.

23. A resonator cell according to any of the claims 1-4, 6-22, wherein said container adapted for spectroscopic observation compartment can hold a sample volume in the range of 10 to 100 ml, or 1 to 10 ml, or 0.1 to 10 ml, or 10 to 100 $\mu$l.

24. A resonator cell according to any of the claims 1-4, 6-23, wherein said container adapted for spectroscopic observation compartment comprises inlet and outlet means.

25. A resonator cell according to any of the preceding claims comprising means for applying an external pressure independently from providing said standing acoustic wave.

26. A resonator cell according to claim 25, wherein said external pressure is in the range from range 1 to $10^9$ Pa, or 1 to $10^6$ Pa, or 1 to $10^3$ Pa.

27. A resonator cell according to any of the claims 4-26, wherein the glass tube has a length of 0.5 to 20 cm, or 1 to 10 cm, or 2 to 5 cm.

**28.** A resonator cell according to any of the claims 4-27, wherein the inner diameter of the cylindrical glass tube is 0.5 to 3 cm, or 1 to 2 cm.

**29.** A resonator cell according to any of the claims 2-28, wherein the diameter of the reflectors is 0.5 to 3 cm, or 1 to 2 cm.

**30.** A resonator cell according to any of the preceding claims, wherein one or more optical windows are provided, each covering one or more regions of relative pressure difference, said optical window or windows having a width of at least 10 nm to 2 cm, or 10 $\mu$m to 0.5 cm, or 0.1 to 1 mm.

**31.** A resonator cell according to any of the preceding claims, wherein an area of the container is coated with a chemically inert and essentially non-electromagnetic-wave-reflecting surface.

**32.** A resonator cell according to any of the preceding claims, comprising spectroscopic detections means, said spectroscopic detections means being selected from the group comprising UV spectroscopy, VIS spectroscopy, NIR spectroscopy, FT-IR spectroscopy, Raman (scattering) spectroscopy, fluorescent spectroscopy techniques, Vibrational Circular Dichroism (VCD) spectroscopy, Optical Rotational Dispersion (ORD) spectroscopy, Raman Optical Activity (ROA) spectroscopy, Surface Enhanced Raman Scattering spectroscopy.

**33.** A resonator cell according to any of the preceding claims, wherein said spectroscopic detection means comprise transmittance, reflectance, transflectance, absorbance, or emission of electromagnetic radiation.

**34.** A resonator cell according to any of the preceding claims comprising NMR as detection means.

**35.** A resonator cell according to any of the preceding claims comprising light detection means selected from the group comprising diode detector array, CCD camera, photo-multiplier tube, PbS detector and/or Si detector.

**36.** An analytical instrument for analyzing a compound in a fluid comprising a resonator cell according to any of the preceding claims, and sampling and cleaning means for consecutive analysis of individual samples.

**37.** A method for analyzing a compound in a fluid comprising a resonator cell according to any of the preceding claims.

Figure 1

Figure 2

**Figure 3**

**Figure 4**

Saphhire

Inlet of the
sample

Sample

**Figure 5**

Water in

Water out

3mm

window

Laser

MW

A

B

C

D

**Figure 6**

**Figure 7**

**Figure 8**

ResponseVolts

Figure 9

FrequencyResponse

Figure 10

**Figure 11**

**Figure 12**

**Figure 13**

**Figure 14**

**European Patent Office**

**EUROPEAN SEARCH REPORT**

Application Number

EP 07 38 8040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/124300 A (AUSTRIA WIRTSCHAFTSSERVICE GES [AT]; LENDL BERNHARD [AT]; SCHNOELLER J) 29 December 2005 (2005-12-29) * abstract; figure 1 * * page 2, paragraph 2 - page 11, paragraph 1 * | 1-37 | INV. G01N21/03 G01N21/63 G01N33/487 G01N29/036 |
| X | WO 2007/007070 A (SMITHS GROUP PLC [GB]; GILLESPIE SEAN ANTHONY [GB]; MARTIN STACEY PETE) 18 January 2007 (2007-01-18) * page 1, paragraph 1 - page 6, last paragraph; figure 1 * | 1-37 | |
| X | RADEL S ET AL: "ULTRASONIC STANDING WAVE ACCELERATES ON-LINE MEASUREMENT AND PREVENTS COATING OF A FTIR ATR FLOW CELL" SENSORS, 2004. PROCEEDINGS OF IEEE VIENNA, AUSTRIA OCT. 24 - 27, 2004, PISCATAWAY, NJ, USA,IEEE, 2004, pages 757-759, XP010793513 ISBN: 0-7803-8692-2 * the whole document * | 1-37 | TECHNICAL FIELDS SEARCHED (IPC) G01N |
| X | US 2006/123884 A1 (SELKER MARK [US] ET AL) 15 June 2006 (2006-06-15) * abstract; figure 9 * * paragraphs [0070], [0071] * | 1,5,36, 37 | |
| X | US 5 141 331 A (OEHLER OSCAR [CH] ET AL) 25 August 1992 (1992-08-25) * abstract; figure 1 * * column 3, line 41 - column 7, line 60 * | 1,5,36, 37 | |
| X | WO 91/14176 A (FLS AIRLOQ AS [DK]) 19 September 1991 (1991-09-19) * abstract; figures 1A-2 * * page 2, line 10 - page 5, line 33 * | 1,5,36, 37 | |

The present search report has been drawn up for all claims

| Place of search | Date of completion of the search | Examiner |
|---|---|---|
| Munich | 31 October 2007 | Uttenthaler, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 38 8040

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2007

| Patent document cited in search report | | Publication date | Patent family member(s) | | Publication date |
|---|---|---|---|---|---|
| WO 2005124300 | A | 29-12-2005 | AT<br>EP | 501052 A4<br>1759180 A1 | 15-06-2006<br>07-03-2007 |
| WO 2007007070 | A | 18-01-2007 | NONE | | |
| US 2006123884 | A1 | 15-06-2006 | NONE | | |
| US 5141331 | A | 25-08-1992 | WO<br>EP | 8907753 A1<br>0362307 A1 | 24-08-1989<br>11-04-1990 |
| WO 9114176 | A | 19-09-1991 | AT<br>DE<br>DE<br>DK<br>EP<br>JP<br>US | 107029 T<br>69102425 D1<br>69102425 T2<br>56290 A<br>0518993 A1<br>5508007 T<br>5339674 A | 15-06-1994<br>14-07-1994<br>29-09-1994<br>06-09-1991<br>23-12-1992<br>11-11-1993<br>23-08-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5949536 A
- EP 0433044 A
- US 4776223 A